# EUROPEAN PATENT SPECIFICATION

(11) **EP 3 165 438 B1**
(45) Date of publication and mention of the grant of the patent: **09.06.2021**
(21) Application number: 14896342.4
(22) Date of filing: 01.07.2014
(51) Int. Cl.: B62M 6/55, B62M 6/50

(54) **ELECTRIC ASSIST BICYCLE**
FAHHRAD MIT ELEKTRISCHEM HILFSFANTRIEB
BICYCLETTE À ASSISTANCE ÉLECTRIQUE

(43) Date of publication of application: 10.05.2017
(73) Proprietor: Panasonic Intellectual Property Management Co., Ltd., Osaka-shi, Osaka 540-6207 (JP)
(72) Inventor: KAWAKAMI, Masafumi, Osaka-shi, Osaka 540-6207 (JP)
(74) Representative: Grünecker Patent- und Rechtsanwälte PartG mbB
(86) International application number: PCT/JP2014/003481
(87) International publication number: WO 2016/001947

(56) References cited:
- EP-A2- 0 765 804
- JP-A- H0 995 289
- JP-A- H10 194 186
- JP-A- H10 194 186
- JP-A- H11 189 192
- JP-A- 2000 006 877
- JP-A- 2000 006 877

## Description

### Technical Field

The present invention relates to an electric assist bicycle capable of traveling with a combination of a human driving force generated by a pedal force from a pedal and an auxiliary driving force generated by a motor.

### Background Art

A known electric assist bicycle includes a motor that receives power supplied from a power storage such as a battery, detects a human driving force composed of a pedal force applied to a pedal by means of a torque sensor, and adds an auxiliary driving force (assisting force) of the motor according to the human driving force. Thus, such an electrically assisted bicycle can smoothly travel on an uphill slope and so on.

In such an electric assist bicycle, a motor drive unit including a motor is disposed where a crank shaft is located. Moreover, the electric assist bicycle configured thus has a relatively heavy motor drive unit that is disposed at a low position at the center of the electric assist bicycle (that is, an intermediate point between the front wheel and the rear wheel) in the longitudinal direction. Thus, the front and rear wheels of the electric assist bicycle configured in this arrangement can be more easily lifted than an electric assist bicycle having a motor in the hub of the front or rear wheel. Such an electric assist bicycle can easily pass over a step of a path, achieving ease of handling and high travelling stability.

Motor drive units to be provided in such an electrically assisted bicycle are broadly classified into a so-called double-shaft motor drive unit 100 that includes, as shown in FIG. 18, an auxiliary-driving force output sprocket 103 that outputs an auxiliary driving force from a motor in addition to a driving sprocket (also called a front sprocket or a chain sprocket) 102 serving as a human driving force output wheel disposed near one end of a crank shaft 101, and a so-called single-shaft motor drive unit 200 shown in FIGS. 19 and 20 in which a human driving force generated by a pedal force and an auxiliary driving force generated by a motor are combined in the motor drive unit 200 and the resultant force is outputted from a driving sprocket 201.

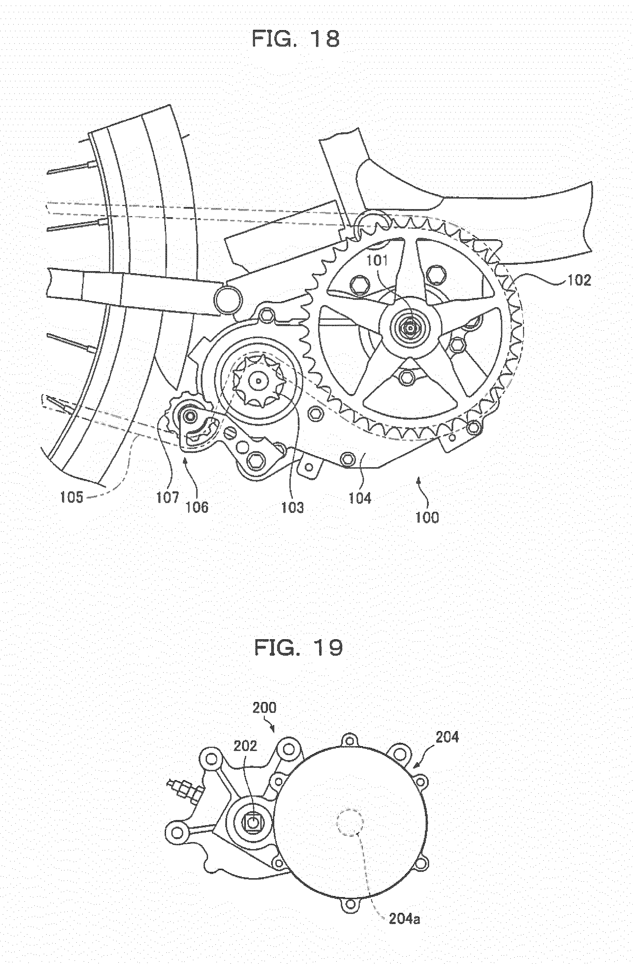

The double-shaft motor drive unit 100 is disclosed in, for example, Patent Literature 1. As shown in FIG. 18, the auxiliary-driving force output sprocket 103 protrudes to the outside of a unit case 104 of the motor drive unit 100 from a portion behind the driving sprocket 102 in the motor drive unit 100. The driving sprocket 102 that outputs a human driving force and the auxiliary-driving force output sprocket 103 that outputs an auxiliary driving force are respectively engaged with a chain 105 serving as an endless driving force transmission member. The human driving force and the auxiliary driving force are combined by the chain 105 and then are transmitted to the rear wheel.

Behind the auxiliary-driving force output sprocket 103, a tensioner device (also called a guide device) 106 is provided in engagement with the chain 105, which has been engaged with the auxiliary-driving force output sprocket 103, so as to guide the chain 105 downward. Moreover, a tension sprocket 107 provided in the tensioner device 106 increases the winding angle of the chain 105 engaged with the auxiliary-driving force output sprocket 103.

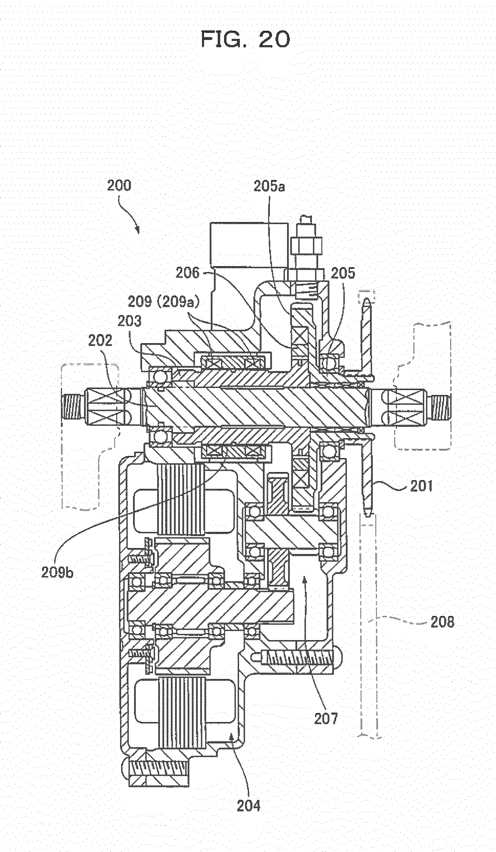

The so-called single-shaft motor drive unit 200 is disclosed in, for example, Patent Literature 2. As shown in FIGS. 19 and 20, in the single-shaft motor drive unit 200, the outer periphery of a crank shaft 202 that receives a human driving force transmitted from the pedal has a cylindrical human-power transmission member 203 that receives the human driving force transmitted by serration coupling and so on, and a resultant force member 205 where a human driving force transmitted via the human-power transmission member 203 is combined with an auxiliary driving force from a motor 204. Moreover, a human driving force from the human-power transmission member 203 is transmitted to the resultant force member 205 via a one-way clutch 206. A large-diameter gear 205a that receives an auxiliary driving force from the motor 204 via a speed reduction mechanism 207 is formed on one end of the resultant force member 205, whereas the driving sprocket 201 is attached to the other end of the resultant force member 205, the driving sprocket 201 serving as a driving force output wheel engaged with a chain 208 serving as an endless driving force transmission member. A resultant force combined in the resultant force member 205 is transmitted from the driving sprocket 201 to the rear wheel through the chain 208.

As shown in FIGS. 19 and 20, the single-shaft motor drive unit 200 is configured such that only the driving sprocket 201 is engaged with the chain 208 and the resultant force of the combination of a human driving force and an auxiliary driving force is transmitted to the chain 208. In contrast, the double-shaft motor drive unit 100 needs to engage, as shown in FIG. 18, the driving sprocket 102 for transmitting a human driving force, the auxiliary-driving force output sprocket 103 for transmitting an auxiliary driving force, and the tension sprocket 107 with the chain 105.

Thus, the area of the single-shaft motor drive unit 200 in side view (laterally projected area) can be advantageously smaller (compact) than that of the double-shaft motor drive unit 100 by devising the layout of the motor 204 and the speed reduction mechanism 207. Moreover, a so-called front derailleur can be attached to the single-shaft motor drive unit 200 including the driving sprocket 201 with multiple stages. In the double-shaft motor drive unit 100, it is necessary to engage the driving sprocket 102, the auxiliary-driving force output sprocket 103, and the tension sprocket 107 with the chain 105, leading to difficulty in attaching the front derailleur. Furthermore, the single-shaft motor drive unit 200 advantageously eliminates the need for providing the tensioner device 106 such as the tension sprocket 107.

Typically, in the advantageous single-shaft motor drive unit 200, a magnetostriction torque sensor 209 for detecting a human driving force is provided on the outer periphery of the human-power transmission member 203, which receives a human driving force transmitted from the crank shaft 202, and a portion opposed to the outer periphery. Specifically, a magnetostriction generation portion 209b is formed on the outer periphery of the human-power transmission member 203, and a coil 209a for detecting a change of magnetism on the magnetostriction generation portion 209b is disposed opposed to the magnetostriction generation portion 209b. When the right and left pedals are pressed, the crank shaft 202 is twisted by a pedal force (human driving force) and thus the twisted state of the human-power transmission member 203 that receives a human driving force transmitted from the crank shaft 202 is detected by the torque sensor 209.

If a front derailleur is attached to the single-shaft motor drive unit 200, an external derailleur for a sport bicycle or the like may be provided on the side of the crank shaft. Specifically, as shown in FIG. 20, a plurality of driving sprockets may be disposed where the driving sprocket 201 is located so as to be displaced from each other along the axial direction of the crank shaft 202 (also referred to as a vehicle width direction), and a front derailleur that moves the chain in the vehicle width direction may be provided near the driving sprockets. From JP H10 194186 A, which shows preamble of claims 1 and 5, it is known a bicycle wherein it is provided a housing in which an electrical motor and a crank shaft are positioned. Between a motor and a respective crank shaft, a planet gear mechanism may be provided. A similar constitution is likewise known from JP 2000 006877 A.

### Citation List

### Patent Literatures

Patent Literature 1: Japanese Patent Publication No. 2009-208710A
Patent Literature 2: Japanese Patent Publication No. H10-250673A

### Summary of Invention

### Technical Problems

However, the single-shaft motor drive unit including the external derailleur may cause the following problems:
First, since the driving sprockets are laterally disposed and the chain is switched among the driving sprockets, the chain needs to have smaller dimensions (smaller thickness) in the vehicle width direction than an ordinary chain. However, in such an electric assist bicycle, the resultant force of a human driving force and an auxiliary driving force is applied to the chain. Thus, the chain having smaller dimensions (smaller thickness) in the vehicle width direction than an ordinary chain may have quite a short life expectancy, causing frequent replacement of components or an insufficient auxiliary driving force.

Generally, a front derailleur provided for a bicycle is disposed diagonally above and behind a driving sprocket. A battery mount and a battery are disposed in this location on an electric assist bicycle and thus these components (the mount and the battery) may interfere with the front derailleur. This may disadvantageously lead to difficulty in preferably arranging the components and the front derailleur.

Since the front derailleur is exposed to the outside, the front derailleur or an engaging portion between the chain and the front derailleur may come into contact with obstacles during traveling. This may cause damage or take off the chain, reducing reliability.

Furthermore, in such an electric assist bicycle, the resultant force of a human driving force and an auxiliary driving force is applied to the chain and thus the front derailleur needs to be developed as a special front derailleur capable of switching in response to a large torque.

In the external derailleur, a chain for transmitting a driving force to the rear wheel and the front derailleur for switching gears are used. Thus, it is difficult to replace the chain with a toothed belt.

The present invention has been devised to solve the problems. An object of the present invention is to provide an electric assist bicycle that can prevent an increase in the frequency of replacement of components such as a chain while achieving a satisfactory gear change, add a sufficient auxiliary driving force, prevent problems caused by interference between a mount or a battery and a front derailleur, and eliminate the need for developing a special front derailleur.

### Solution to Problems

In order to solve the aforementioned problem, the present invention provides an electric assist bicycle having the feature defined in claim 1. It is also provided an electric assist bicycle having the feature defined in claim 5. Further preferred arrangements are defined in the dependent claims.

In particular, it is provided an electrically assisted bicycle having the features defined in claim 5. Further preferred arrangements are defined in the dependent claims.

### Advantageous Effects of Invention

The present invention eliminates the need for a chain having small dimensions (small thickness) in the vehicle width direction if an external derailleur is provided in the single-shaft motor drive unit. Thus, the chain does not have an extremely short life expectancy that causes frequent replacement of components or an insufficient auxiliary driving force. Moreover, this eliminates the need for a front derailleur and any problems according to a location of the front derailleur. Furthermore, a gear change using the planet gear mechanism can output a force without being placed into a neutral state (idle state). This does not lead to a neutral state (idle state) during a gear change, preventing discomfort or shock to a rider. The endless driving force transmission member that transmits a driving force to the rear wheel may be a chain or a toothed belt.

The planet gear mechanism changes a gear for the resultant force of a human driving force and an auxiliary driving force from the motor, thereby obtaining a larger force output range than in a configuration where a human driving force is combined with an auxiliary driving force after a gear change or in a configuration where an auxiliary driving force is combined with a human driving force after a gear change.

The planet gear mechanism includes the internal gear that inputs the resultant force of a human driving force and an auxiliary driving force from the motor, and the carrier that outputs the resultant force with a variable speed. Thus, the resultant force can be outputted while a speed is reduced by the planet gear mechanism. At a high gear used for a relatively heavy load, this configuration can prevent transmission of a torque while a speed is increased or reduced by engagement of the gears of the planet gear mechanism. Thus, the tooth surfaces and roots of the gears are less likely to be damaged, thereby advantageously obtaining strength and an extended use period (so-called a life expectancy) of the planet gear mechanism.

Moreover, the planet gear mechanism includes the sun gear that inputs the resultant force of a human driving force and an auxiliary driving force from the motor, and the carrier that outputs the resultant force with a variable speed. Thus, the resultant force can be outputted while a speed is reduced by the planet gear mechanism. If an intermediate shaft is provided between the motor and the crank shaft to increase the torque of an auxiliary driving force, the number of gears provided on the intermediate shaft can be reduced, thereby reducing the size of the motor drive unit.

The planet gear mechanism includes the sun gear that inputs the resultant force of a human driving force and an auxiliary driving force from the motor, and a carrier that outputs the resultant force with a variable speed. Thus, the resultant force can be outputted while a speed is reduced by the planet gear mechanism. Also in this case, at the high gear used for a relatively heavy load, this configuration can prevent transmission of a torque while a speed is increased or reduced by engagement of the gears of the planet gear mechanism. Thus, the tooth surfaces and roots of the gears are less likely to be damaged, thereby advantageously obtaining strength and an extended use period (so-called a life expectancy) of the planet gear mechanism. If an intermediate shaft is provided between the motor and the crank shaft to increase the torque of an auxiliary driving force, the number of gears provided on the intermediate shaft can be reduced, thereby reducing the size of the motor drive unit.

### Brief Description of Drawings

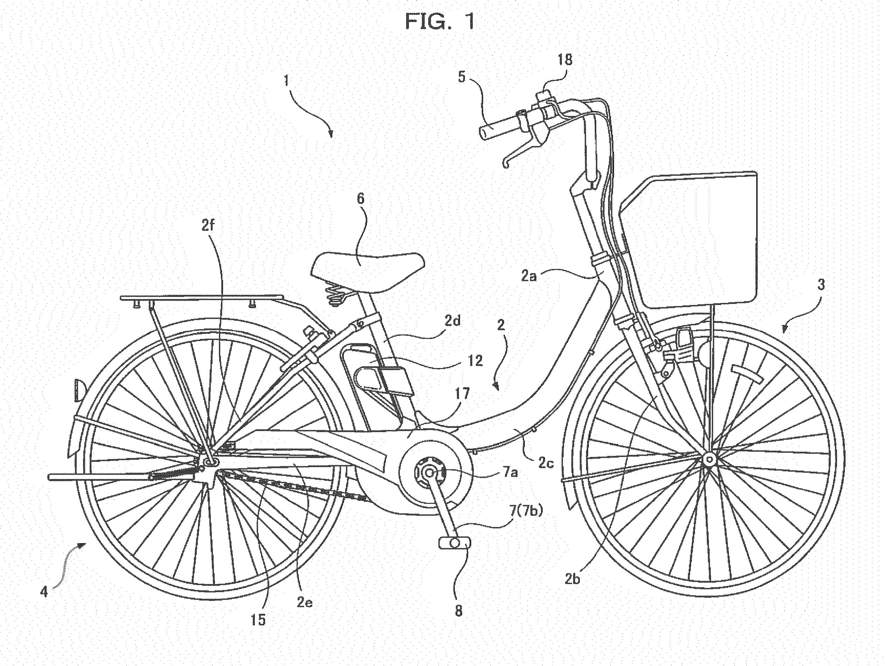

[FIG. 1] FIG. 1 is an overall side view of an electric assist bicycle according to an arrangement .

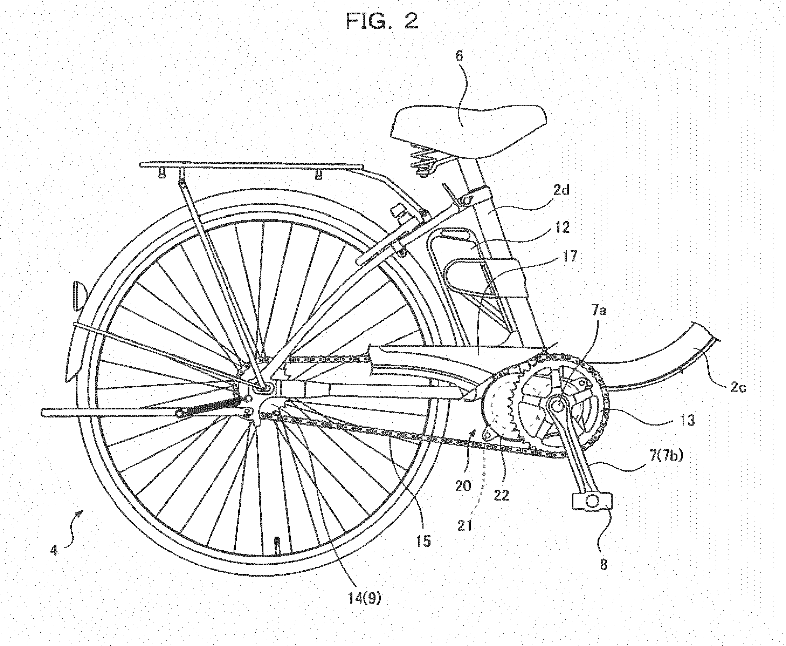

[FIG. 2] FIG. 2 is a partial cut side view of the electric assist bicycle.

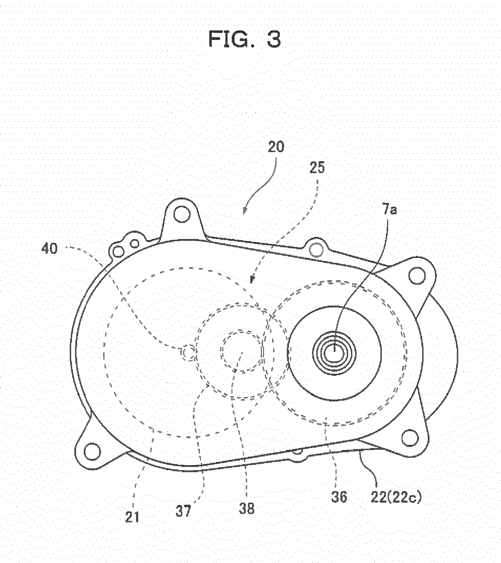

[FIG. 3] FIG. 3 is a right side view of a motor drive unit for the electric assist bicycle.

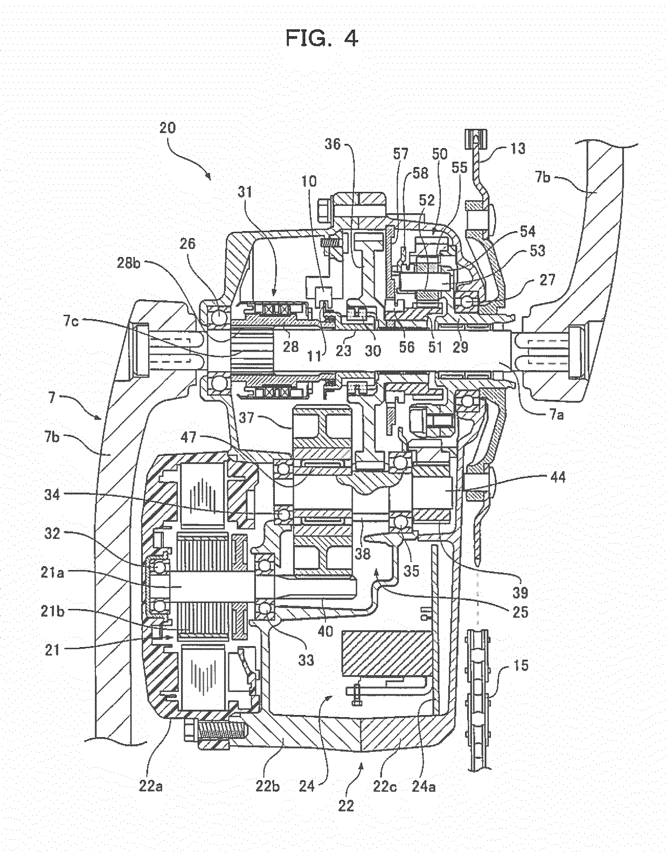

[FIG. 4] FIG. 4 is a sectional plan view showing the motor drive unit for the electric assist bicycle at a low speed (first speed) according to a first arrangement . The first arrangement is an embodiment of the present invention.

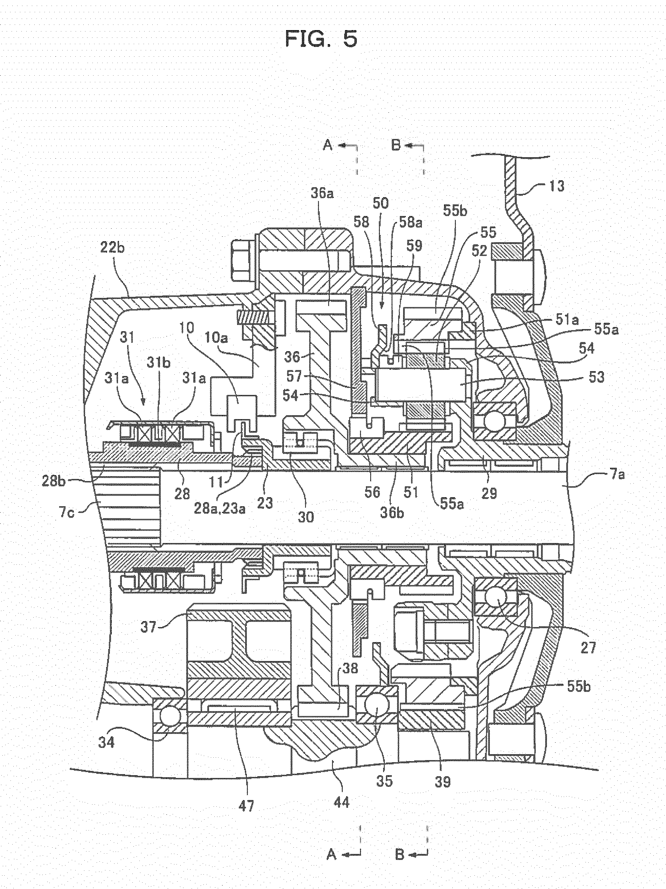

[FIG. 5] FIG. 5 is an enlarged sectional plan view showing the principal part of the motor drive unit at the low speed (first speed).

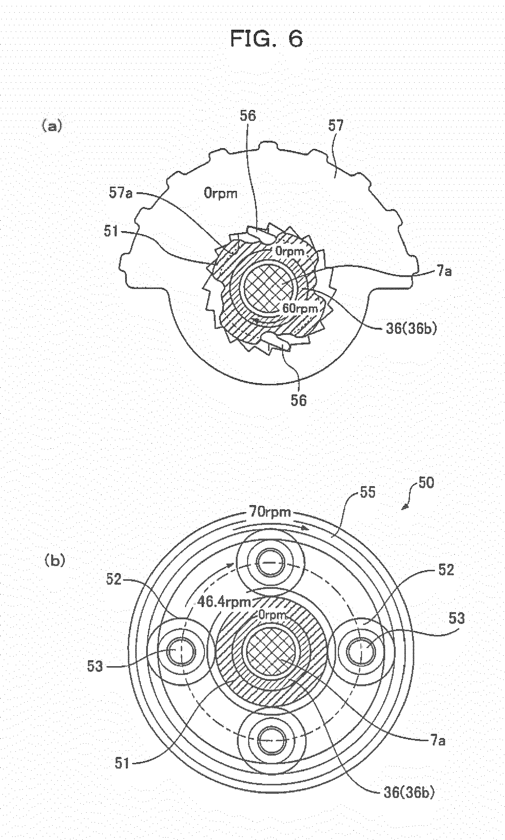

[FIG. 6] FIGS. 6(a) and 6(b) are a right side view showing the principal part of the motor drive unit taken along line A-A of FIG. 5 and a right side view showing the principal part of the motor drive unit taken along line B-B of FIG. 5 at a low speed (first speed).

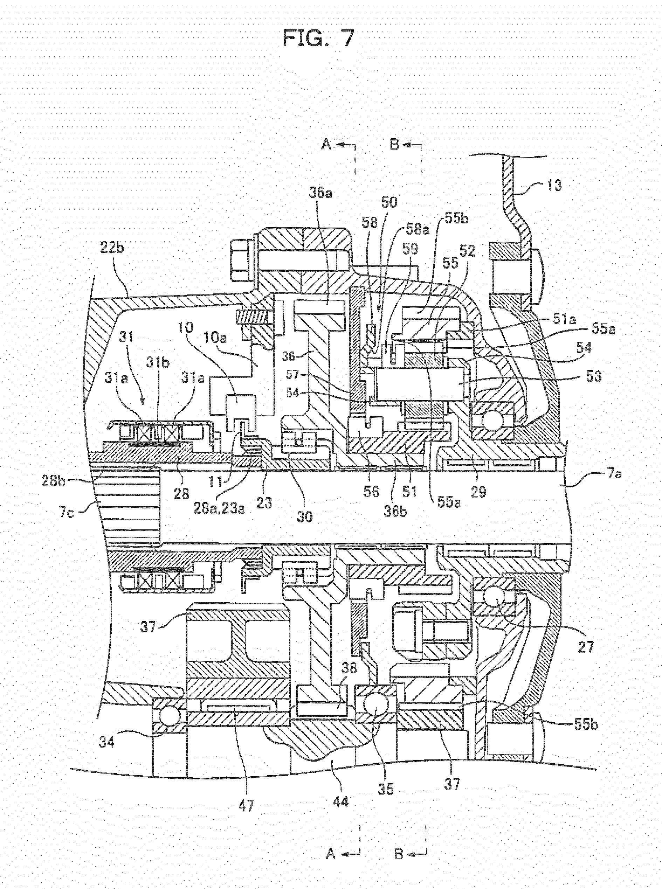

[FIG. 7] FIG. 7 is an enlarged sectional plan view showing the principal part of the motor drive unit at a high speed (second speed).

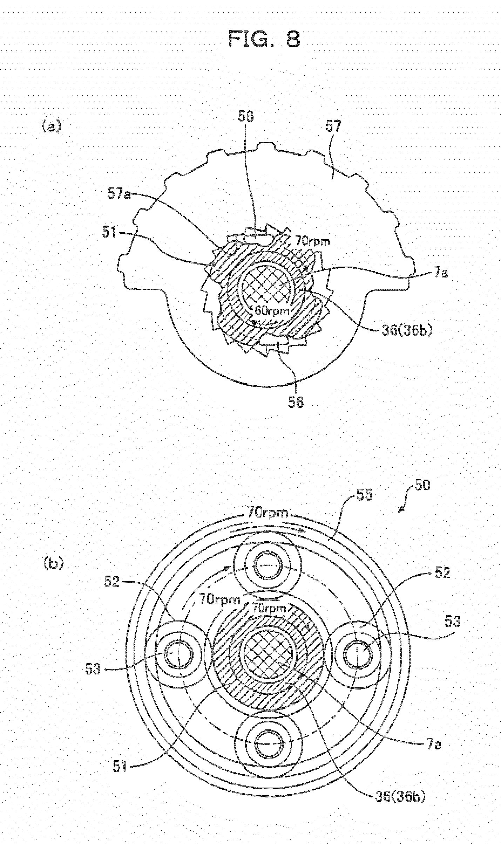

[FIG. 8] FIGS. 8(a) and 8(b) are a right side view showing the principal part of the motor drive unit taken along line A-A of FIG. 7 and a right side view showing the principal part of the motor drive unit taken along line B-B of FIG. 7 at the high speed (second speed).

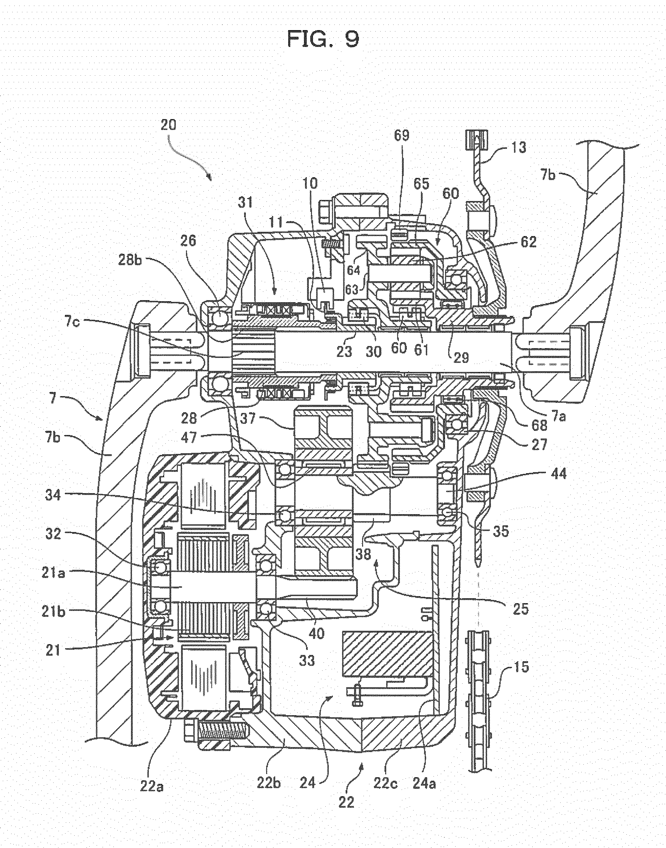

[FIG. 9] FIG. 9 is a sectional plan view showing a motor drive unit for an electric assist bicycle at a low speed (first speed) according to a second arrangement . The second arrangement is an arrangement which is helpful for understanding the present invention.

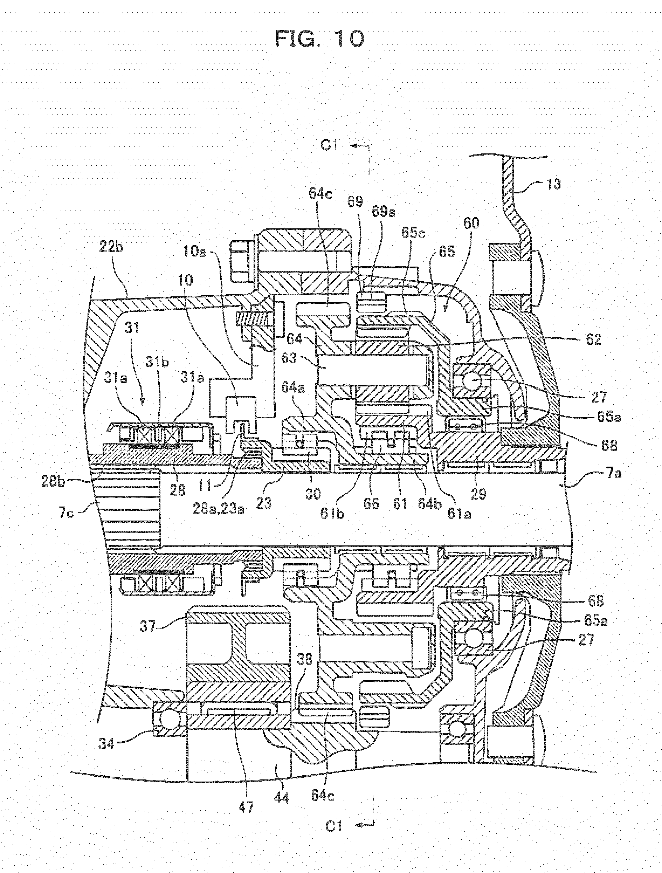

[FIG. 10] FIG. 10 is an enlarged sectional plan view showing the principal part of the motor drive unit at the low speed (first speed).

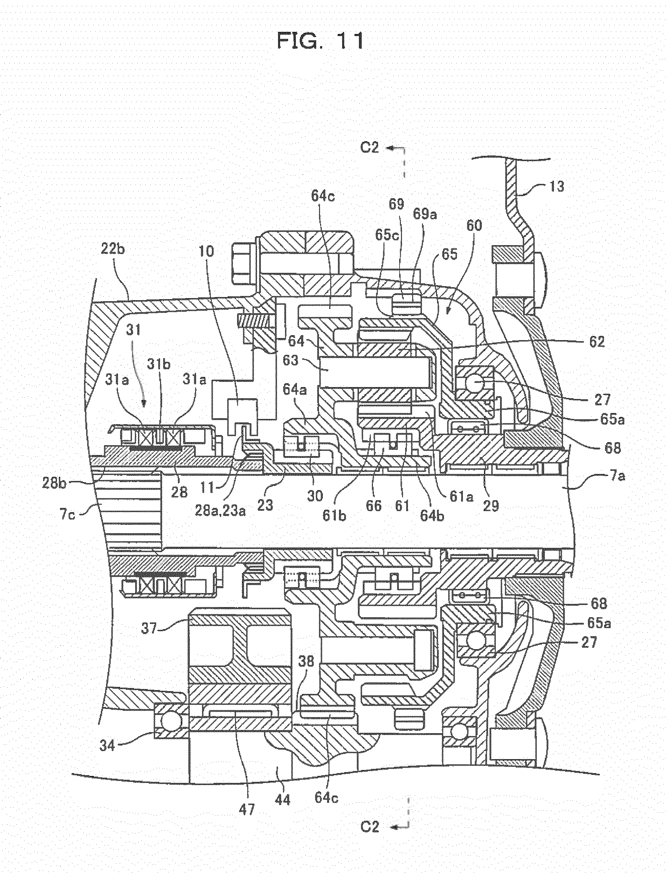

[FIG. 11] FIG. 11 is an enlarged sectional plan view showing the principal part of the motor drive unit at a high speed (second speed).

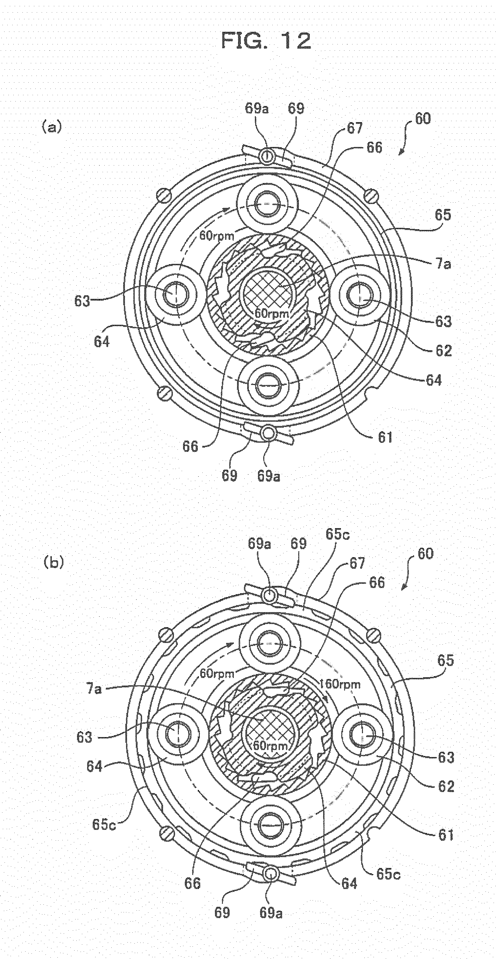

[FIG. 12] FIGS. 12(a) and 12(b) are a right side view showing the principal part of the motor drive unit taken along line C1-C1 of FIG. 10 at the low speed (first speed) and a right side view showing the principal part of the motor drive unit taken along line C2-C2 of FIG. 11 at the high speed (second speed).

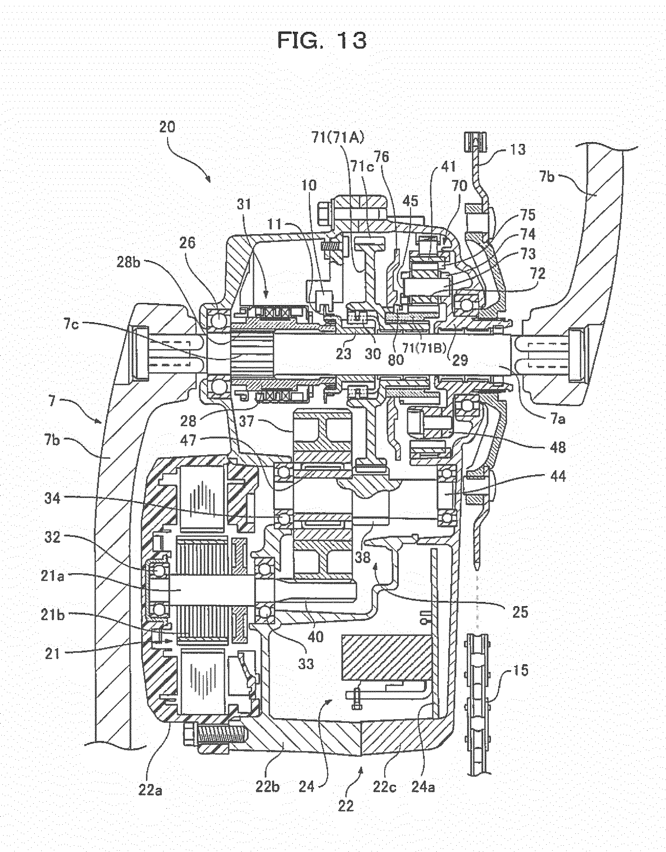

[FIG. 13] FIG. 13 is a sectional plan view showing a motor drive unit for an electric assist bicycle at a low speed (first speed) according to a third arrangement . The third arrangement is a further embodiment of the present invention.

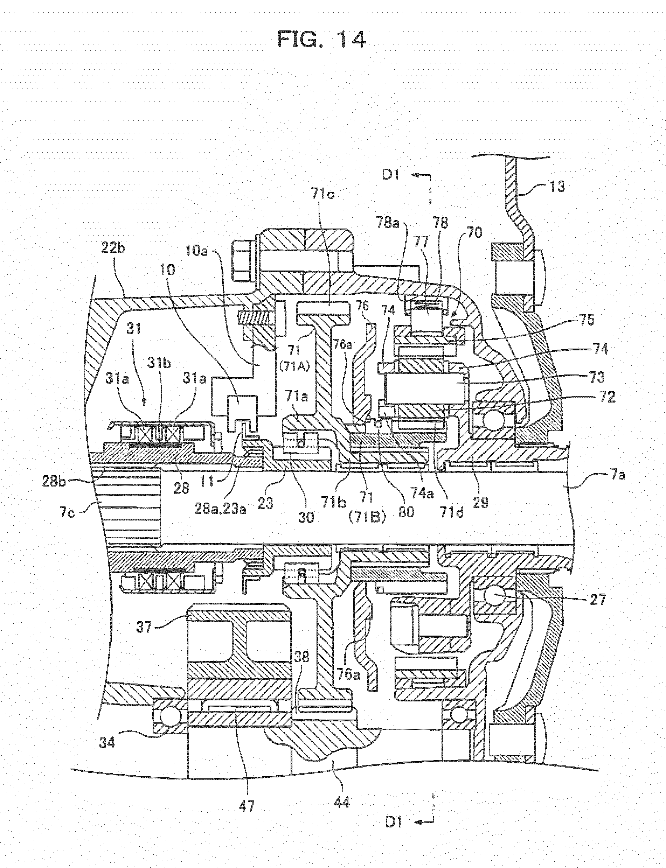

[FIG. 14] FIG. 14 is an enlarged sectional plan view showing the principal part of the motor drive unit at the low speed (first speed).

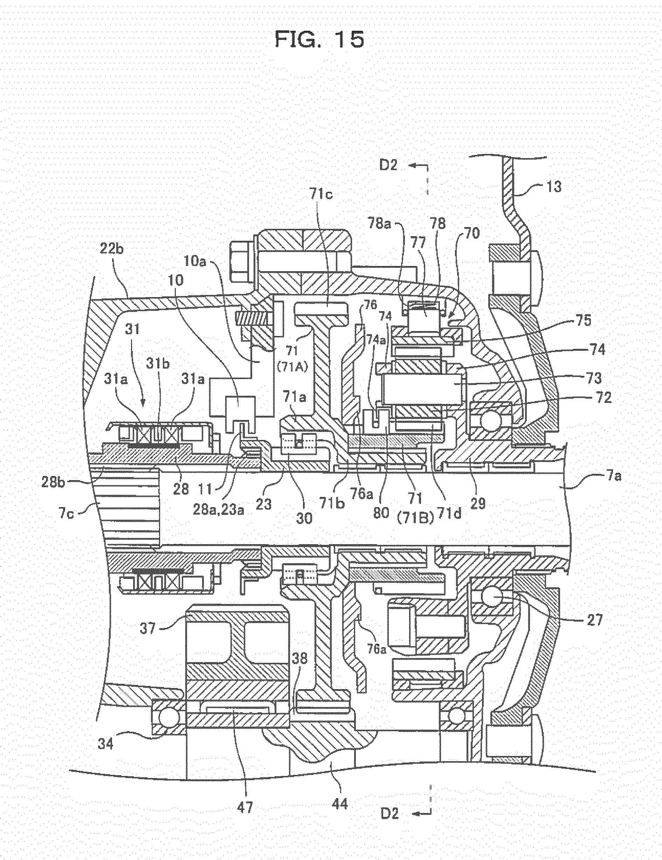

[FIG. 15] FIG. 15 is an enlarged sectional plan view showing the principal part of the motor drive unit at a high speed (second speed).

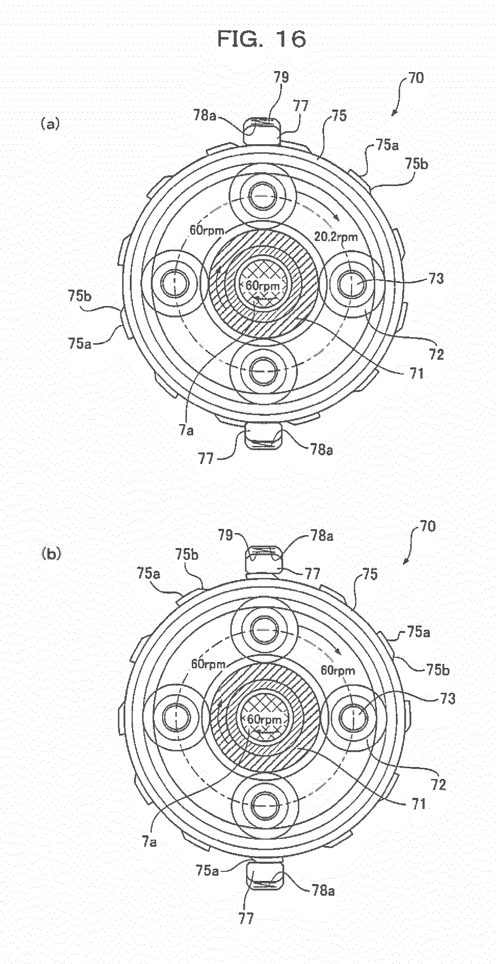

[FIG. 16] FIGS. 16(a) and 16(b) are a right side view showing the principal part of the motor drive unit taken along line D1-D1 of FIG. 14 at the low speed (first speed) and a right side view showing the principal part of the motor drive unit taken along line D2-D2 of FIG. 15 at the high speed (second speed).

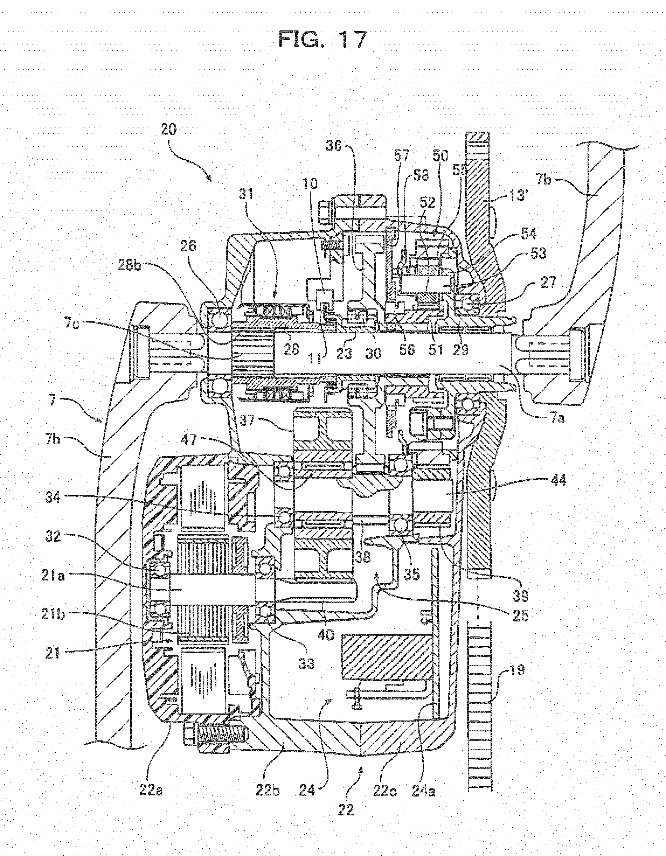

[FIG. 17] FIG. 17 is a sectional plan view showing a motor drive unit for an electric assist bicycle according to another arrangement .
[FIG. 18] FIG. 18 is a side view showing a double-shaft motor drive unit and a location near the motor drive unit for an electric assist bicycle of the related art.
[FIG. 19] FIG. 19 is a side view showing a single-shaft motor drive unit for an electric assist bicycle of the related art.
[FIG. 20] FIG. 20 is a sectional plan view of the single-shaft motor drive unit.

### Description of Arrangements

An electric assist bicycle according to an arrangement will be described below with reference to the accompanying drawings. In the following explanation, a lateral direction and a longitudinal direction are set relative to the traveling direction of a rider on an electric assist bicycle 1. The present invention is not limited to the following configuration. In the following there are described several arrangements. The first arrangement and the third arrangements, as well as the arrangement shown in figure 17 are embodiments which are covered by the present claims.

In FIGS. 1 and 2, reference numeral 1 denotes the electric assist bicycle according to the arrangement . As shown in FIGS. 1 and 2, the electric assist bicycle 1 has: a metallic frame 2 including a head tube 2a, a front fork 2b, a main tube 2c, a seat tube 2d, a chain stay 2e, and a seat stay 2f; a front wheel 3 rotatably attached to the lower end of the front fork 2b; a rear wheel 4 rotatably attached to the rear end of the chain stay 2e; a handle bar 5 that changes the direction of the front wheel 3; a saddle 6; a crank 7 and pedals 8 that receive a human driving force including a pedal force; a motor drive unit 20 including an electric motor 21 (For example, see FIG. 4) serving as a driving source for generating an auxiliary driving force (assisting force) and a control unit 24 (FIG. 4) for various kinds of electrical control on the motor 21 and so on; a battery 12 including a secondary battery for supplying driving power to the motor 21; a manual gear change part 18 for setting the speed (a low speed (first speed) or a high speed (second speed)) of the gear changing function of a planet gear mechanism 25, which will be discussed later, the manual gear change part 18 being attached to, for example, the handle bar 5 so as to be operated by a rider and so on; a manual operation part (not shown) for switching the power supply of the electric assist bicycle 1 and setting a travelling mode, the manual operation part being attached to, for example, the handle bar so as to be operated by a rider and so on; a driving sprocket (may be called a front sprocket, a crank sprocket, or a front gear) 13 that is attached so as to coaxially rotate with a crank shaft 7a and serves as a driving force output wheel for outputting the resultant force of a human driving force and an auxiliary driving force; a rear sprocket (may be called a rear gear) 14 serving as a rear wheel attached to the hub (also called a rear hub) 9 of the rear wheel 4; a chain 15 serving as an endless driving force transmission member rotatably wound around the driving sprocket 13 and the rear sprocket 14 in an endless manner; and a chain cover 17 that laterally covers the chain 15 and so on.

The battery 12 is an example of a power storage and preferably serves as a secondary battery. Another example of a power storage may be a capacitor. The crank 7 includes crank arms 7b provided on the right and left of the crank 7 and the crank shaft 7a connecting the right and left crank arms 7b. The pedal 8 is rotatably attached to the end of the crank arm 7b.

As shown in FIGS. 1 and 2, also in the electric assist bicycle 1, the motor drive unit 20 is disposed at an intermediate position between the front wheel 3 and the rear wheel 4, for example, substantially behind the crank shaft 7a (specifically, under the intermediate position). This configuration locates the relatively heavy motor drive unit 20 at the center of the electric assist bicycle 1 in the longitudinal direction. Thus, the front wheel 3 and the rear wheel 4 are easily lifted and the electric assist bicycle 1 can easily pass over a step of a path, achieving ease of handling of the body (e.g., the frame 2) of the electric assist bicycle 1 and high travelling stability.

FIG. 3 is a right side view of the motor drive unit 20. FIG. 4 is a sectional plan view of the motor drive unit 20.

As shown in FIGS. 3 and 4, the motor drive unit 20 includes a unit case 22 constituting a casing and so on. The unit case 22 includes a motor case 22a, a left-side case 22b, and a right-side case 22c. The crank shaft 7a laterally penetrates the front of the motor drive unit 20. Moreover, the outer periphery of the crank shaft 7a has a substantially cylindrical human-power transmission member 28 that receives a human driving force transmitted from the crank shaft 7a, an interlocking cylindrical part 23 that receives a human driving force transmitted from the human-power transmission member 28, and a resultant-force transmission member 29 that receives a human driving force from the interlocking cylindrical part 23 via, for example, a one-way clutch (a one-way clutch for interrupting an auxiliary driving force) 30 and transmits the resultant force of the human driving force and an auxiliary driving force from the motor 21 to the driving sprocket 13.

Moreover, a planet gear mechanism 50 that changes a gear for the resultant force of a human driving force and an auxiliary driving force from the motor 21 is provided on the right side of the front of the unit case 22 in the motor drive unit 20. Furthermore, the speed reduction mechanism 25 having a plurality of reduction gears 36 to 40 is disposed at the center of the motor drive unit 20 in the longitudinal direction. In the present arrangement, as will be discussed later, the planet gear mechanism 50 also provides the function of an internal derailleur (internal gear change unit). Moreover, the motor 21 is disposed on the left side of the rear of the unit case 22 while the control unit 24 is disposed on the right side of the rear of the unit case 22, the control unit 24 including a control circuit board 24a having electronic components for various kinds of electrical control and a storage containing various kinds of information.

The motor drive unit 20 will be more specifically described below. As shown in, for example, FIGS. 4 and 5, the crank shaft 7a laterally penetrating the front of the motor drive unit 20 is disposed so as to rotate with bearings 26 and 27. The cylindrical human-power transmission member 28 is fit onto the outer periphery of the left side of the crank shaft 7a via a serration part (or a spline part) 7c so as to rotate as an integral part. Moreover, a serration part (or a spline part) 28b is formed at a point corresponding to the serration part (or a spline part) 7c of the crank shaft 7a inside the human-power transmission member 28, and the serration part 28b is engaged with the serration part (or a spline part) 7c of the crank shaft 7a.

A magnetostriction generation portion 31b having magnetic anisotropy is formed on the outer surface of the human-power transmission member 28. Coils 31a are disposed with a certain clearance (space) on the outer periphery of the human-power transmission member 28. The magnetostriction generation portion 31b and the coils 31a constitute a magnetostriction torque sensor (human power detection part) 31. With this configuration, a human driving force from the crank shaft 7a is transmitted to the human-power transmission member 28 and is detected by the torque sensor 31. In the magnetostriction torque sensor 31, the magnetostriction generation portion 31b is spirally formed with an angle of, for example, +45° to - 45° with respect to the axial direction of the human-power transmission member 28. When a human driving force is transmitted to the human-power transmission member 28, the magnetostriction generation portion 31b on the surface of the human-power transmission member 28 is distorted so as to have portions increased and portions decreased in magnetic permeability. Thus, a difference in the inductance of the coil 31a is measured so as to detect the magnitude of the torque (human driving force).

The interlocking cylindrical part 23 is disposed next to the right side of the human-power transmission member 28 on the outer periphery of the crank shaft 7a so as to rotate relative to the crank shaft 7a. The interlocking cylindrical part 23 rotates integrally with the human-power transmission member 28 while a serration part (or a spline part) 28a formed on the outer periphery of the right end of the human-power transmission member 28 and a serration part (or a spline part) 23a formed on the inner periphery of the left end of the interlocking cylindrical part 23 fit to each other. In the present arrangement, the serration part (or a spline part) 23a formed on the inner periphery of the left end of the interlocking cylindrical part 23 is fit onto the serration part (or a spline part) 28a of the human-power transmission member 28.

Furthermore, in the present arrangement, a rotation detecting member 11 for detecting a rotational state of the interlocking cylindrical part 23 is attached to the outer periphery of the left side of the interlocking cylindrical part 23. Moreover, a rotation detector 10 is fixed to the unit case 22 via an attachment member 10a so as to laterally hold the rotation detecting member 11 with a small clearance. For example, the rotation detector 10 includes a pair of optical sensors disposed along the rotation direction of the rotation detecting member 11, the optical sensor including a light emitting part and a light receiving part. The rotation detecting member 11 has a large number of teeth (light-shielding portions) extending outward like comb teeth. The teeth of the rotation detecting member 11 pass between the light emitting part and the light receiving part of the rotation detector 10, allowing the rotation detector 10 to electrically detect a light incidence state and a light shielding state. Subsequently, the amount and direction of rotation of the interlocking cylindrical part 23 are detected in the control unit 24 that receives the signal of the rotation detector 10. The optical sensor may be replaced with a magnetometric sensor to detect the amount and direction of rotation of the interlocking cylindrical part 23. In this case, the interlocking cylindrical part 23 rotates integrally with the human-power transmission member 28 while the human-power transmission member 28 rotates integrally with the crank shaft 7a. Thus, the detection of the amount and direction of rotation of the interlocking cylindrical part 23 allows detection of the amounts and directions of rotations of the crank shaft 7a and the pedal 8.

The low-speed reduction gear (one of the reduction gears) 36 provided in the speed reduction mechanism 25 is disposed on the outer periphery of the right side of the interlocking cylindrical part 23 via the one-way clutch (one-way clutch for interrupting an auxiliary driving force) 30. During pedaling forward with the pedals 8, a human driving force transmitted to the interlocking cylindrical part 23 is transmitted to the low-speed reduction gear 36 of the speed reduction mechanism 25.

As shown in FIG. 4, the motor 21 includes a rotating shaft 21a and a rotor portion 21b that are rotatably supported by motor bearings 32 and 33. The rotating shaft 21a of the motor 21 protrudes to the right so as to form a motor-shaft reduction gear 40, which will be discussed later, on the outer periphery of the protruding portion.

As shown in FIGS. 4 and 5, the speed reduction mechanism 25 includes an intermediate shaft 44 disposed in parallel with the crank shaft 7a, and the reduction gears 36 to 40 including the low-speed reduction gear 36. Moreover, the speed reduction mechanism 25 combines a human driving force transmitted through the crank shaft 7a and an auxiliary driving force transmitted from the motor 21 and then transmits the resultant force of the human driving force and the auxiliary driving force to the intermediate shaft 44 with a variable speed.

The intermediate shaft 44 is laterally extended at the center of the motor drive unit 20 in the longitudinal direction and is rotatably supported in parallel with the crank shaft 7a by the bearings 34 and 35. The intermediate shaft 44 has a one-way clutch 47 for interrupting a human driving force, the large-diameter first intermediate-shaft reduction gear 37, the small-diameter second intermediate-shaft reduction gear 38, and the small-diameter third intermediate-shaft reduction gear 39 that is larger in diameter than the second intermediate-shaft reduction gear 38. If the one-way clutch 47 for interrupting a human driving force is not disengaged, the first to third intermediate-shaft reduction gears 37 to 39 rotate integrally with the intermediate shaft 44.

The small-diameter motor-shaft reduction gear 40 is formed on the rotating shaft 21a of the motor 21 and is engaged with the large-diameter first intermediate-shaft reduction gear 37. This configuration reduces the speed of rotation of the motor 21, increases the torque of an auxiliary driving force from the motor 21, and transmits the torque to the intermediate shaft 44. The small-diameter second intermediate-shaft reduction gear 38 is engaged with the large-diameter low-speed reduction gear 36 rotatably disposed on the outer periphery of the crank shaft 7a. With this configuration, human power transmitted from the crank shaft 7a through the human-power transmission member 28, the interlocking cylindrical part 23, and the one-way clutch 30 for interrupting an auxiliary driving force is further transmitted to the intermediate shaft 44 through the low-speed reduction gear 36 and the second intermediate-shaft reduction gear 38. In the intermediate shaft 44, a human driving force and an auxiliary driving force are combined. In the present arrangement, the resultant force of the human driving force and the auxiliary driving force is transmitted to the planet gear mechanism 50 through the third intermediate-shaft reduction gear 39 and then is transmitted to the resultant-force transmission member 29 and the driving sprocket 13 through the planet gear mechanism 50 with a variable speed.

As shown in FIGS. 5 and 6, the planet gear mechanism 50 of the present arrangement includes: a sun gear 51 that is rotatable via the outer periphery of a small-diameter part 36b on the right side of the low-speed reduction gear 36; a plurality of (e.g., three) planet gears 52 that are engaged with the teeth of the sun gear 51 so as to revolve around the sun gear 51 and rotate on its own axes; planet gear axes 53 that rotatably support the respective planet gears 52; a carrier 54 that supports the planet gear axes 53 so as to revolve the planet gear axes 53; an internal gear 55 engaged with the planet gears 52 from the outer periphery; a fixation member 57 that is fixed with a front portion fit onto the front inner surface of the unit case 22; sun-gear fixing clutches 56 attached to the outer periphery of the left side of the sun gear 51, the sun-gear fixing clutches 56 including one-way clutches that are engageable with teeth 57a (FIG. 6(a)) formed on the inner periphery of the fixation member 57 and restrict a counterclockwise rotation of the sun gear 51 so as to fix the sun gear 51; and a transmission clutch 58 (FIG. 5) that is spline coupled to the carrier 54 via a locking preventing one-way clutch 59 so as to slide in the axial direction, the transmission clutch 58 having a projecting inclined surface 58a capable of inclining the cam (claw) of the locking preventing one-way clutch 59. The locking preventing one-way clutch 59 can be removably engaged with internal teeth 55a of the internal gear 55 so as to prevent locking of the resultant-force transmission member 29 when the electric assist bicycle 1 is moved backward.

In the present arrangement, the internal teeth 55a engaged with the planet gears 52 are formed on the inner periphery of the internal gear 55. Moreover, external teeth 55b are formed on the outer periphery of the internal gear 55. Furthermore, the third intermediate-shaft reduction gear 39 is engaged with the external teeth 55b of the internal gear 55 so as to transmit a resultant force from the intermediate shaft 44 to the internal gear 55, which is an input to the internal gear 55 of the planet gear mechanism 50. Moreover, the carrier 54 on the right side is integrated with the resultant-force transmission member 29, thereby transmitting an output from the carrier 54 of the planet gear mechanism 50 to the resultant-force transmission member 29. In other words, the planet gear mechanism 50 of the present arrangement receives a resultant force inputted from the internal gear 55 and outputs the force from the carrier 54.

The transmission clutch 58 is moved through a cable and so on in response to an operation of the manual gear change part 18. When the manual gear change part 18 is switched to a low gear (first gear), as shown in FIGS. 4 and 5, the projecting inclined surface 58a of the transmission clutch 58 comes into contact with the cam (claw) of the locking preventing one-way clutch 59 to incline the cam. This separates the cam of the locking preventing one-way clutch 59 from the internal teeth 55a of the internal gear 55, allowing the carrier 54 and the internal gear 55 to rotate individually. When the manual gear change part 18 is switched to a high gear (second gear), as shown in FIG. 7, the projecting inclined surface 58a of the transmission clutch 58 separates from the cam of the locking preventing one-way clutch 59 so as to raise the cam of the locking preventing one-way clutch 59. The carrier 54 and the internal gear 55 are engaged with each other by the cam of the locking preventing one-way clutch 59 so as to rotate as an integral part.

In this configuration, when the manual gear change part 18 is switched to the low gear (first gear), as shown in FIGS. 4 and 5, the projecting inclined surface 58a of the transmission clutch 58 comes into contact with the cam (claw) of the locking preventing one-way clutch 59 so as to incline the cam, allowing the carrier 54 and the internal gear 55 to rotate individually. A resultant force transmitted to the intermediate shaft 44 is then transmitted to the internal gear 55 through the third intermediate-shaft reduction gear 39. Thus, as shown in FIG. 6(b), the internal gear 55 and the planet gear 52 rotate clockwise in a right side view. The sun gear 51 is intended to be rotated in the opposite direction, that is, counterclockwise by a reaction force from the planet gear 52. However, as shown in FIG. 6(a), the cams of the sun-gear fixing clutches 56 attached to the sun gear 51 are engaged with the fixation member 57 and thus the sun gear 51 is fixed without being rotated counterclockwise.

This rotates the carrier 54 at a lower speed than the internal gear 55. For example, if the sun gear 51 has 29 teeth, the planet gear 52 has 13 teeth, the number of internal teeth 55a of the internal gear 55 is 57, and the crank shaft is rotated at 60 revolutions per minute (rpm), the internal gear 55 is rotated at 70 revolutions per minute (rpm) and the carrier 54 is rotated at 46.4 revolutions per minute (rpm) (See FIGS. 6(a) and 6(b)). Subsequently, a resultant force at a reduced speed in the planet gear mechanism 50 is transmitted to the resultant-force transmission member 29 and the driving sprocket 13, and then the resultant force is transmitted to the rear wheel 4 through the chain 15.

When the manual gear change part 18 is switched to a high gear (second gear), as shown in FIG. 7, the projecting inclined surface 58a of the transmission clutch 58 separates from the cam of the locking preventing one-way clutch 59. Thus, the cam (claw) of the locking preventing one-way clutch 59 can be raised into engagement with the internal teeth 55a of the internal gear 55, integrally rotating the carrier 54 and the internal gear 55. With this configuration, as shown in FIG. 8(b), the internal gear 55, the carrier 54, and the planet gear 52 are integrally rotated at fixed relative positions, allowing the sun gear 51 to integrally rotate with the internal gear 55 and the carrier 54. At this point, as shown in FIG. 8(a), the sun-gear fixing clutches 56 are placed in an idle state. Thus, if the crank shaft is rotated at 60 revolutions per minute (rpm), the internal gear 55 and the carrier 54 are both rotated at 70 revolutions per minute (rpm) (See FIGS. 8(a) and 8(b)). A resultant force is transmitted to the resultant-force transmission member 29 and the driving sprocket 13 while a speed is not increased or reduced in the planet gear mechanism 50, and then the resultant force is transmitted to the rear wheel 4 through the chain 15.

This configuration eliminates the need for a chain having small dimensions (small thickness) in the vehicle width direction if an external derailleur is provided in a single-shaft motor drive unit. Thus, the chain does not have an extremely short life expectancy that causes frequent replacement of components or an insufficient auxiliary driving force. Moreover, this eliminates the need for a front derailleur and any problems according to a location of the front derailleur. Furthermore, a gear change using the planet gear mechanism 50 can output a force without being placed into a neutral state (idle state). This does not lead to a neutral state (idle state) during a gear change, preventing discomfort or shock to a rider.

Moreover, the planet gear mechanism 50 changes a gear for the resultant force of a human driving force and an auxiliary driving force from the motor, thereby obtaining a larger force output range than in a configuration where a human driving force is combined with an auxiliary driving force after a gear change or in a configuration where an auxiliary driving force is combined with a human driving force after a gear change.

As described above, in the planet gear mechanism 50, the resultant force of a human driving force and an auxiliary driving force from the motor 21 is inputted from the internal gear 55 and is outputted from the carrier 54. This can output the resultant force while a speed is reduced by the planet gear mechanism 50. At the high gear used for a relatively heavy load, the internal gear 55, the carrier 54, and the sun gear 51 are integrally rotated so as to prevent transmission of a torque while a speed is increased or reduced by engagement of the gears of the planet gear mechanism 50. The tooth surfaces and roots of the gears are less likely to be damaged than in a configuration where the gears of the planet gear mechanism 50 are slidably engaged to transmit a torque at the high and low gears. This can advantageously obtain strength and an extended use period (so-called a life expectancy) of the planet gear mechanism 50.

In the present arrangement (first arrangement), the planet gear mechanism 50 inputs a resultant force from the internal gear 55 and outputs the force from the carrier 54. The planet gear mechanism 50 may be replaced with a planet gear mechanism 60 that inputs a resultant force from a carrier 64 and outputs the force from a sun gear 61 (second arrangement). In the present arrangement, the intermediate shaft 44 includes the second intermediate-shaft reduction gear 38 but does not include the third intermediate-shaft reduction gear 39. The second arrangement is not covered by the present claims.

As shown in FIGS. 9 and 10, the planet gear mechanism 60 of the present arrangement also includes: the sun gear 61; a plurality of (e.g., three) planet gears 62 that are engaged with teeth 61a so as to revolve around the sun gear 61 and rotate on its own axes, the teeth 61a being formed on the outer periphery of the sun gear 61; planet gear axes 63 that rotatably support the respective planet gears 62; a carrier 64 that supports the planet gear axes 63 so as to revolve the planet gear axes 63; and an internal gear 65 engaged with the planet gears 62 from the outer periphery. Moreover, teeth 64c to be engaged with the second intermediate-shaft reduction gear 38 are formed on the large-diameter outer periphery of the carrier 64. Furthermore, a cylindrical medium-diameter part 64a is formed on the left side of the inner periphery of the carrier 64. The medium-diameter part 64a of the carrier 64 is attached to the outer periphery of the interlocking cylindrical part 23 via the one-way clutch 30 for interrupting an auxiliary driving force. Moreover, a cylindrical small-diameter part 64b is formed on the right side of the inner periphery of the carrier 64. The small-diameter part 64b of the carrier 64 is rotatably disposed on the outer periphery of the crank shaft 7a.

In the planet gear mechanism 60, a one-way clutch 66 is disposed also between the outer periphery of the small-diameter part 64b of the carrier 64 and the inner periphery of the sun gear 61. The cam of the one-way clutch 66 can be engaged with teeth 61b formed on the inner periphery of the sun gear 61. The sun gear 61 is integrally formed with the resultant-force transmission member 29, allowing a force transmitted to the sun gear 61 to be directly transmitted to the resultant-force transmission member 29. Moreover, a cylindrical small-diameter part 65a is formed on the right side of the internal gear 65. The small-diameter part 65a of the internal gear 65 is rotatably supported between a bearing 68 disposed on the outer periphery of the resultant-force transmission member 29 and the bearing 27 disposed outside the bearing 68.

Furthermore, as shown in FIG. 12, the planet gear mechanism 60 has an annular fixed frame 67 that is disposed near the outer periphery of the sun gear 61 so as to be fixed to the unit case 22 (right-side case 22c). Moreover, claw-like transmission clutches 69 pivotable about respective shafts 69a are disposed at predetermined points on the fixed frame 67 (the transmission clutches 69 provided at two points in the circumferential direction of the fixed frame 67 in FIGS. 12(a) and 12(b) may be circumferentially provided at one or at least three points) such that the transmission clutches 69 are movable along the axial direction of the crank shaft 7a. The transmission clutches 69 move through cables or the like (not shown) in response to an operation of the manual gear change part 18.

As shown in FIG. 10, teeth 65c engageable with the ends of the transmission clutches 69 are formed on the outer periphery of the internal gear 65 with the transmission clutches 69 facing the outer periphery of the internal gear 65. The left sides of the teeth 65c simply have cylindrical shapes that are not engaged with the ends of the transmission clutches 69. The ends of the transmission clutches 69 are urged by, for example, helical springs (not shown) in the direction of movement to the outer periphery of the internal gear 65.

In this configuration, when the manual gear change part 18 is switched to the low gear (first gear), as shown in FIGS. 9, 10, and 12(a), the transmission clutches 69 are moved to the left so as to face positions where the teeth 65c are not formed on the outer periphery of the internal gear 65. Thus, the transmission clutches 69 do not regulate the rotation of the internal gear 65, allowing a free rotation of the internal gear 65. An auxiliary driving force transmitted to the intermediate shaft 44 is transmitted to the carrier 64 through the second intermediate-shaft reduction gear 38 and then is combined with a human driving force in the carrier 64. As shown in FIG. 12(a), the cams of the one-way clutches 66 attached to the carrier 64 are engaged with the sun gear 61. Thus, the sun gear 61 is integrally rotated with the small-diameter part 64b of the carrier 64 and the internal gear 65 is integrally rotated with the carrier 64 and the planet gear 62 because the rotation of the internal gear 65 is not regulated. This integrally rotates the internal gear 65 and the sun gear 61 with the carrier 64 at the same rotation speed. Hence, for example, if the carrier 64 is rotated at 60 revolutions per minute (rpm) with the same number of teeth as in the present arrangement, the sun gear 61 is also rotated at 60 revolutions per minute (rpm). In this way, at the low gear (first gear), a resultant force is transmitted to the resultant-force transmission member 29 and the driving sprocket 13 without increasing or reducing a speed in the planet gear mechanism 60, and then the force is transmitted to the rear wheel 4 through the chain 15.

When the manual gear change part 18 is switched to the high gear (second gear), as shown in FIGS. 11 and 12(b), the transmission clutches 69 are moved to the right into engagement with the teeth 65c on the outer periphery of the internal gear 65. This regulates the rotation of the internal gear 65 in a predetermined direction (counterclockwise in FIG. 12(b)) by means of the transmission clutch 58. The carrier 64 is rotated while the counterclockwise rotation of the internal gear 65 is regulated, thereby rotating the sun gear 61 in an accelerated state. For example, if the carrier 64 is rotated at 60 revolutions per minute (rpm), the sun gear 61 is rotated at about 160 revolutions per minute (rpm). At the high gear (second gear), a resultant force in an accelerated state in the planet gear mechanism 60 is outputted from the sun gear 61, is transmitted to the resultant-force transmission member 29 and the driving sprocket 13, and is transmitted to the rear wheel 4 through the chain 15. At this point, the sun gear 61 rotates faster than the small-diameter part 64b of the carrier 64, thereby idling the one-way clutch 66 disposed between the sun gear 61 and the small-diameter part 64b.

This configuration also eliminates the need for a chain having small dimensions (small thickness) in the vehicle width direction if an external derailleur is provided in the single-shaft motor drive unit 20. Thus, the chain does not have an extremely short life expectancy that causes frequent replacement of components or an insufficient auxiliary driving force. Moreover, this eliminates the need for a front derailleur and any problems according to a location of the front derailleur. Furthermore, a gear change using the planet gear mechanism 60 can output a force without being placed into a neutral state (idle state). This does not lead to a neutral state (idle state) during a gear change, preventing discomfort or shock to a rider.

In the present arrangement, a human driving force and an auxiliary driving force from the motor 21 are inputted to the carrier 64 of the planet gear mechanism 60 and are combined therein, and then the planet gear mechanism 60 changes a gear for the resultant force. This obtains a larger force output range than in a configuration where a human driving force is combined with an auxiliary driving force after a gear change or in a configuration where an auxiliary driving force is combined with a human driving force after a gear change.

As described above, in the planet gear mechanism 60, the resultant force of a human driving force and an auxiliary driving force from the motor 21 is inputted from the carrier 64 and is outputted from the sun gear 61. This configuration can output the resultant force while a speed is increased by the planet gear mechanism 60. This configuration can also eliminate the need for the third intermediate-shaft reduction gear 39 of the first arrangement and reduce the number of gears provided on the intermediate shaft 44, thereby reducing the size of the motor drive unit 20. Moreover, the bearings 34 and 35 can support both ends of the intermediate shaft 44 and thus may be compact bearings having relatively small capacities (bearing capacities), thereby further reducing the size of the motor drive unit 20 (particularly a size reduction of the motor drive unit 20 in the width direction).

In the present arrangement (second arrangement), the planet gear mechanism 60 inputs a resultant force from the carrier 64 and outputs the force from the sun gear 61. The planet gear mechanism 60 may be replaced with a planet gear mechanism 70 that inputs a resultant force from a sun gear 71 and outputs the force from a carrier 74 (third arrangement). In the present arrangement, the intermediate shaft 44 does not include the third intermediate-shaft reduction gear 39 as in the second arrangement.

As shown in FIGS. 13 and 14, the planet gear mechanism 70 of the present arrangement also includes: the sun gear 71; a plurality of (e.g., three) planet gears 72 that are engaged with teeth 71d of the sun gear 71 so as to revolve around the sun gear 71 and rotate on its own axes; planet gear axes 73 that rotatably support the respective planet gears 72; a carrier 74 that supports the planet gear axes 73 so as to revolve the planet gear axes 73; and an internal gear 75 engaged with the planet gears 72 from the outer periphery. Moreover, in the present arrangement, large-diameter teeth 71c to be engaged with the second intermediate-shaft reduction gear 38 are formed on the outer periphery of the sun gear 71 (specifically, a sun gear body 71A that will be discussed later). Furthermore, a cylindrical medium-diameter part 71a is formed on the left side of the inner periphery of the sun gear 71. The medium-diameter part 71a of the sun gear 71 is attached to the outer periphery of the interlocking cylindrical part 23 via the one-way clutch 30 for interrupting an auxiliary driving force. When human power (pedal force) is added, the sun gear 71 combines a human driving force and an auxiliary driving force generated by the motor 21.

In the present arrangement, in order to attach a transmission clutch, which will be discussed later, to the sun gear 71, the sun gear 71 is divided into the sun gear body 71A and an external cylindrical part 71B that is fit onto a small-diameter part 71b formed on the right side of the inner periphery of the sun gear body 71A with a serration part or the like interposed between the small-diameter part 71b and the external cylindrical part 71B. Moreover, the teeth 71d to be engaged with the planet gears 72 are formed on the right side of the outer periphery of the external cylindrical part 71B of the sun gear 71. The present invention is not limited to this configuration and thus the sun gear 71 may include a single component. The small-diameter part 71b rotatably supports the sun gear 71 on the outer periphery of the crank shaft 7a.

Moreover, a transmission clutch 76 is attached to the left region of the outer periphery of the external cylindrical part 71B via a spline part in the sun gear 71 so as to slide in the axial direction. The transmission clutch 76 moves through a cable or the like in response to an operation of the manual gear change part 18. Furthermore, a projecting inclined surface 76a is formed on the right side of the inner periphery of the transmission clutch 76 so as to incline the cam (claw) of the locking preventing one-way clutch 80 mounted on the outer periphery of the external cylindrical part 71B of the sun gear 71. The locking preventing one-way clutch 80 can be removably engaged with teeth 74a formed on the inner periphery of the carrier 74. When the electric assist bicycle 1 is moved backward, the locking preventing one-way clutch 80 prevents locking of the resultant-force transmission member 29.

When the manual gear change part 18 is switched to a low gear (first gear), as shown in FIGS. 13 and 14, the projecting inclined surface 76a of the transmission clutch 76 comes into contact with the cam (claw) of the locking preventing one-way clutch 80 to incline the cam. This separates the cam of the locking preventing one-way clutch 80 from the teeth 74a of the carrier 74, allowing the sun gear 71 and the carrier 74 to rotate individually. When the manual gear change part 18 is switched to a high gear (second gear), as shown in FIG. 15, the projecting inclined surface 76a of the transmission clutch 76 separates from the cam of the locking preventing one-way clutch 80 so as to raise the cam of the locking preventing one-way clutch 80. The sun gear 71 and the carrier 74 are engaged with each other by the cam of the locking preventing one-way clutch 80 so as to rotate as an integral part.

The carrier 74 on the right side is integrally formed with the resultant-force transmission member 29 so as to transmit an output from the carrier 74 of the planet gear mechanism 70 to the resultant-force transmission member 29. In other words, the planet gear mechanism 70 of the present arrangement inputs a resultant force from the sun gear 71 and outputs the force from the carrier 74.

As shown in FIGS. 16(a) and 16(b), in the present arrangement, a plurality of protrusions 75a are formed on the outer periphery of the internal gear 75. An inclined surface 75b is formed only on one side of the protrusion 75a (as shown in FIGS. 16(a) and 16(b), the clockwise side of the protrusion 75a with respect to the axis of the crank shaft 7a in a right side view). Furthermore, blocks 77 substantially rectangular in cross section are provided in contact with the respective protrusions 75a. The block 77 can protrude and retract from a storage recess 78a formed on a fixed ring 78 that is fixed on the inner periphery of the front of the unit case 22. A leaf spring 79 is disposed near the outer periphery of the storage recess 78a so as to urge the block 77 inward (into contact with the internal gear 75). In other words, the block 77 pressed to the outer periphery of the internal gear 75 rotates the internal gear 75 only in one direction (a clockwise direction in FIGS. 16(a) and 16(b)) with the same function as a so-called one-way clutch (an example of an internal gear switching device that switches the internal gear 75 of the planet gear mechanism 70 between a fixed state and a rotational state). This mechanism may be replaced with a one-way clutch having a cam.

In this configuration, when the manual gear change part 18 is switched to the low gear (first gear), as shown in FIGS. 13, 14, and 16(a), the transmission clutch 76 is moved to the right such that the projecting inclined surface 76a of the transmission clutch 76 comes into contact with the cam (claw) of the locking preventing one-way clutch 80 so as to incline the cam. This does not regulate the rotations of the sun gear 71 and the carrier 74, allowing free rotations of the sun gear 71 and the carrier 74. When a human driving force is added, the sun gear 71 rotates with the same number of revolutions (e.g., 60 revolutions per minute (rpm)) and in the same direction (clockwise as shown in FIG. 16(a)) as the crank shaft 7a. Thus, the planet gears 72 rotate counterclockwise around the planet gear axes 73. The internal gear 75 is about to rotate counterclockwise by a reaction force from the planet gear 72. At this point, the block 77 is intended to come into contact with one side of the protrusion 75a of the internal gear 75, the inclined surface 75b not being provided on the one side. This fixes the internal gear 75. The sun gear 71 is rotated with the fixed internal gear 75 so as to rotate the carrier 74 in a decelerated state (e.g., 20.2 revolutions per minute (rpm)). In this way, at the low gear (first gear), a resultant force is outputted from the carrier 74 in the decelerated state in the planet gear mechanism 70. The resultant force with an increased torque in the decelerated state is transmitted to the resultant-force transmission member 29 and the driving sprocket 13 and then is transmitted to the rear wheel 4 through the chain 15.

When the manual gear change part 18 is switched to the high gear (second gear), as shown in FIGS. 15 and 16(b), the transmission clutch 76 is moved to the left so as to separate the projecting inclined surface 76a of the transmission clutch 76 from the cam of the locking preventing one-way clutch 80. This can raise the cam of the locking preventing one-way clutch 80 and rotate the sun gear 71 integrally with the carrier 74 with the same number of revolutions (e.g., 60 revolutions per minute (rpm)) and in the same direction (clockwise as shown in FIG. 16(a)) as the crank shaft 7a. Moreover, the sun gear 71 integrally rotating with the carrier 74 also integrally rotates the internal gear 75 (e.g., 60 revolutions per minute (rpm)). At this point, the block 77 comes into contact with the protrusion 75a of the internal gear 75. Since the inclined surface 75b is formed on the contact surface, the internal gear 75 smoothly rotates clockwise. In this way, at the high gear (second gear), a resultant force is directly outputted from the carrier 74 without increasing or reducing a speed in the planet gear mechanism 70. Subsequently, the resultant force is transmitted to the resultant-force transmission member 29 and the driving sprocket 13 and then is transmitted to the rear wheel 4 through the chain 15.

This configuration also eliminates the need for a chain having small dimensions (small thickness) in the vehicle width direction if an external derailleur is provided in the single-shaft motor drive unit 20. Thus, the chain does not have an extremely short life expectancy that causes frequent replacement of components or an insufficient auxiliary driving force. Moreover, this eliminates the need for a front derailleur and any problems according to a location of the front derailleur. Furthermore, a gear change using the planet gear mechanism 70 can output a force without being placed into a neutral state (idle state). This does not lead to a neutral state (idle state) during a gear change, preventing discomfort or shock to a rider.

In the present arrangement, a human driving force and an auxiliary driving force from the motor 21 are inputted to the sun gear 71 of the planet gear mechanism 70 and are combined therein, and then the planet gear mechanism 70 changes a gear for the resultant force. This obtains a larger force output range than in a configuration where a human driving force is combined with an auxiliary driving force after a gear change or in a configuration where an auxiliary driving force is combined with a human driving force after a gear change.

As described above, in the planet gear mechanism 70, the resultant force of a human driving force and an auxiliary driving force from the motor is inputted from the sun gear 71 and is outputted from the carrier 74. This configuration can output the resultant force while a speed is reduced by the planet gear mechanism 70. This configuration can also eliminate the need for the third intermediate-shaft reduction gear 39 of the first arrangement and reduce the number of gears provided on the intermediate shaft 44, thereby reducing the size of the motor drive unit 20 (particularly a size reduction of the motor drive unit 20 in the width direction). Moreover, the bearings 34 and 35 can support both ends of the intermediate shaft 44 and thus may be compact bearings having relatively small capacities (bearing capacities), thereby further reducing the size of the motor drive unit 20.

At the high gear used for a relatively heavy load, the sun gear 71, the carrier 74, and the internal gear 75 are integrally rotated so as to prevent transmission of a torque while a speed is increased or reduced by engagement of the gears of the planet gear mechanism 70. The tooth surfaces and roots of the gears are less likely to be damaged than in a configuration where the gears of the planet gear mechanism 70 are slidably engaged to transmit a torque at the high and low gears. This can advantageously obtain strength and an extended use period (so-called a life expectancy) of the planet gear mechanism 70.

In the above arrangements, a force from the driving sprocket 13 is transmitted to the rear sprocket 14 through the chain 15 serving as an endless driving force transmission member. The present invention is not limited to this configuration. As shown in FIG. 17, a force from a driving gear 13' corresponding to a driving sprocket may be transmitted to a rear gear (not shown) through a toothed belt 19 serving as an endless driving force transmission member.

### Industrial Applicability

The present invention is applicable to various electric assist bicycles capable of traveling with a combination of a human driving force generated by a pedal force from a pedal and an auxiliary driving force generated by a motor.

## Claims

1. An electric assist bicycle (1) comprising a motor drive unit (20) with a motor (21), the electric assist bicycle (1) being capable of traveling with a combination of a human driving force generated by a pedal force from a pedal and an auxiliary driving force generated by the motor (21),
wherein the electric assist bicycle (1) comprises a crank shaft (7a) that receives the human driving force transmitted from the pedal (8) and rotates about a different axis from the motor (21),
the crank shaft (7a) has a human-power transmission member (7b) on an outer periphery of the crank shaft (7a), the human-power transmission member (7b) receiving the transmitted human driving force,
the crank shaft (7a) has a resultant-force transmission member (29) on the outer periphery of the crank shaft (7a), the resultant-force transmission member (29) receiving a resultant force of the human driving force and the auxiliary driving force from the motor (21), and
the motor drive unit (20) includes a planet gear mechanism (50) that changes a gear for the resultant force of the human driving force and the auxiliary driving force from the motor (21),
wherein the planet gear mechanism (50) includes an internal gear (55) that inputs the resultant force of the human driving force and the auxiliary driving force from the motor (21), and a carrier (54) that outputs the resultant force with a variable speed, **characterized by** the electric assist bicycle (1) further comprising a transmission clutch (58) that switches the internal gear (55) and the carrier (54) between an integral rotation state and a non-integral rotation state.

2. The electric assist bicycle (1) according to claim 1, wherein the planet gear mechanism (50) includes a sun gear (51) and the internal gear (55) that are coaxial with the crank shaft (7a).

3. The electric assist bicycle (1) according to one of claims 1 and 2, wherein the human-power transmission member (7b), the resultant-force transmission member (29), and the planet gear mechanism (50) are disposed in the motor drive unit (20), and the resultant force transmitted to the resultant-force transmission member (29) through the planet gear mechanism (50) is configured to be transmitted to a rear wheel (4) through a driving force output wheel (13) coaxial with the crank shaft (7a) and an endless driving force transmission member (15) looped over the driving force output wheel (13).

4. The electric assist bicycle (1) according to one of claim 1, further comprising a fixation member (57) fixed to a unit case (22) of the motor drive unit (20), and a one-way clutch (30) for fixing a sun gear (51) disposed between the fixation member (57) and the sun gear (51).

5. An electric assist bicycle (1) comprising a motor drive unit (20) with a motor (21), the electric assist bicycle (1) being capable of traveling with a combination of a human driving force generated by a pedal force from a pedal and an auxiliary driving force generated by the motor (21),
wherein the electric assist bicycle (1) comprises a crank shaft (7a) that receives the human driving force transmitted from the pedal (8) and rotates about a different axis from the motor (21),
the crank shaft (7a) has a human-power transmission member (7b) on an outer periphery of the crank shaft (7a), the human-power transmission member (7b) receiving the transmitted human driving force,
the crank shaft (7a) has a resultant-force transmission member (13) on the outer periphery of the crank shaft (7a), the resultant-force transmission member (29) receiving a resultant force of the human driving force and the auxiliary driving force from the motor (21), and
the motor drive unit (20) includes a planet gear mechanism (60) that changes a gear for the resultant force of the human driving force and the auxiliary driving force from the motor (21), **characterized in that** the planet gear mechanism (60) includes a sun gear (71) that inputs the resultant force of the human driving force and the auxiliary driving force from the motor (21), and a carrier (74) that outputs the resultant force with a variable speed, wherein the electric assist bicycle (1) further comprising a transmission clutch (76) switches the sun gear (71) and the carrier (74) of the planet gear mechanism (60) between an integral rotation state and a non-integral rotation state.

6. The electric assist bicycle (1) according to claim 5, further comprising an internal gear switching device that switches the internal gear of the planet gear mechanism (60) between a fixed state and a rotational state.

7. The electric assist bicycle (1) according to one of claims 1 to 6, wherein the human-power transmission member (7b) has a magnetostriction generation portion for a torque sensor that detects the human driving force.

8. The electric assist bicycle (1) according to one of claims 1 to 7, wherein the human-power transmission member (7b) or a component interlocking with the human-power transmission member (7b) includes a rotation detector that detects a rotation of the human-power transmission member (7b).

9. The electric assist bicycle (1) according to claim 3, wherein the endless driving force transmission member (15) is a toothed belt.

## Patentansprüche

1. Fahrrad (1) mit elektrischer Unterstützung, das eine Motorantriebseinheit (20) mit einem Motor (21) umfasst, wobei das Fahrrad (1) mit elektrischer Unterstützung in der Lage ist, mit einer Kombination aus einer menschlichen Antriebskraft, die durch eine Pedalkraft von einem Pedal erzeugt wird, und einer Hilfsantriebskraft, die durch den Motor (21) erzeugt wird, zu fahren,
wobei das Fahrrad (1) mit elektrischer Unterstützung eine Kurbelwelle (7a) umfasst, die die vom Pedal (8) übertragene menschliche Antriebskraft aufnimmt und sich um eine vom Motor (21) verschiedene Achse dreht,
die Kurbelwelle (7a) ein Menschenkraft-Übertragungselement (7b) an einem Außenumfang der Kurbelwelle (7a) aufweist, wobei das Menschenkraft-Übertragungselement (7b) die übertragene Menschenantriebskraft aufnimmt,
die Kurbelwelle (7a) ein resultierende Kraft-Übertragungselement (13) auf dem Außenumfang der Kurbelwelle (7a) aufweist, wobei das resultierende Kraft-Übertragungselement (29) eine resultierende Kraft einer menschlichen Antriebskraft und die Hilfsantriebskraft vom Motor (21) aufnimmt, und
die Motorantriebseinheit (20) einen Planetengetriebemechanismus (50) enthält, der einen Gang für die resultierende Kraft der menschlichen Antriebskraft und der Hilfsantriebskraft von dem Motor (21) wechselt,
wobei der Planetengetriebemechanismus (50) ein Innenzahnrad (55), das die resultierende Kraft der menschlichen Antriebskraft und der Hilfsantriebskraft von dem Motor (21) eingibt, und einen Träger (54) enthält, der die resultierende Kraft mit einer variablen Geschwindigkeit ausgibt, **dadurch gekennzeichnet**, das das Fahrrad (1) mit elektrischer Unterstützung ferner eine Übertragungskupplung (58) umfasst, die das Innenzahnrad (55) und den Träger (54) zwischen einem integralen Drehzustand und einem nichtintegralen Drehzustand schaltet.

2. Fahrrad (1) mit elektrischer Unterstützung nach Anspruch 1, wobei der Planetengetriebemechanismus (50) ein Sonnenrad (51) und das Innenzahnrad (55) umfasst, die koaxial mit der Kurbelwelle (7a) sind.

3. Fahrrad (1) mit elektrischer Unterstützung nach einem der Ansprüche 1 und 2, wobei das Menschenkraft-Übertragungselement (7b), das resultierende Kraft-Übertragungselement (29) und der Planetengetriebemechanismus (50) in der Motorantriebseinheit (20) angeordnet sind, und die resultierende Kraft, die durch den Planetengetriebemechanismus (50) auf das resultierende Kraft-Übertragungselement (29) übertragen wird, so konfiguriert ist, dass sie durch ein Antriebskraftausgangsrad (13), das koaxial mit der Kurbelwelle (7a) ist, und ein endloses Antriebskraftübertragungselement (15), das über das Antriebskraftausgangsrad (13) geschlungen ist, auf ein Hinterrad (4) übertragen wird.

4. Fahrrad (1) mit elektrischer Unterstützung nach einem der Ansprüche 1 bis 3, ferner enthaltend ein Befestigungselement (57), das an einem Einheitsgehäuse (22) der Motorantriebseinheit (20) befestigt ist, und einer Einwegkupplung (30) zum Befestigen eines Sonnenrades (51), die zwischen dem Befestigungselement (57) und dem Sonnenrad (51) angeordnet ist.

5. Fahrrad (1) mit elektrischer Unterstützung, das eine Motorantriebseinheit (20) mit einem Motor (21) umfasst, wobei das Fahrrad (1) mit elektrischer Unterstützung in der Lage ist, mit einer Kombination aus einer menschlichen Antriebskraft, die durch eine Pedalkraft von einem Pedal erzeugt wird, und einer Hilfsantriebskraft, die durch den Motor (21) erzeugt wird, zu fahren,
wobei das Fahrrad (1) mit elektrischer Unterstützung eine Kurbelwelle (7a) umfasst, die die vom Pedal (8) übertragene menschliche Antriebskraft aufnimmt und sich um eine vom Motor (21) verschiedene Achse dreht,
die Kurbelwelle (7a) ein Menschenkraft-Übertragungselement (7b) an einem Außenumfang der Kurbelwelle (7a) aufweist, wobei das Menschenkraft-Übertragungselement (7b) die übertragene menschliche Antriebskraft aufnimmt,
die Kurbelwelle (7a) ein resultierende Kraft-Übertragungselement (13) auf dem Außenumfang der Kurbelwelle (7a) aufweist, wobei das resultierende Kraft-Übertragungselement (29) die resultierende Kraft der menschlichen Antriebskraft und der Hilfsantriebskraft vom Motor (21) aufnimmt, und
die Motorantriebseinheit (20) einen Planetengetriebemechanismus (60) enthält, der einen Gang für die resultierende Kraft der menschlichen Antriebskraft und der Hilfsantriebskraft von dem Motor (21) wechselt,
**dadurch gekennzeichnet, dass** der Planetengetriebemechanismus (60) ein Sonnenrad (71), das die resultierende Kraft der menschlichen Antriebskraft und der Hilfsantriebskraft von dem Motor (21) eingibt, und einen Träger (74), der die resultierende Kraft mit einer variablen Geschwindigkeit ausgibt, umfasst, wobei das Fahrrad (1) mit elektrischer Unterstützung ferner eine Übertragungskupplung (76) umfasst, die das Sonnenrad (71) und den Träger (74) des Planetengetriebemechanismus (60) zwischen einem integralen Drehzustand und einem nicht-integralen Drehzustand schaltet.

6. Fahrrad (1) mit elektrischer Unterstützung nach Anspruch 5, ferner umfassend eine Innenzahnradschaltvorrichtung, die das Innenzahnrad des Planetengetriebemechanismus (60) zwischen einem festen Zustand und einem Drehzustand schaltet.

7. Fahrrad (1) mit elektrischer Unterstützung nach einem der Ansprüche 1 bis 6, wobei das Menschenkraft-Übertragungselement (7b) einen Magnetostriktionserzeugungsabschnitt für einen Drehmomentsensor aufweist, der die menschliche Antriebskraft erfasst.

8. Fahrrad (1) mit elektrischer Unterstützung nach einem der Ansprüche 1 bis 7, wobei das Menschenkraft-Übertragungselement (7b) oder ein mit dem Menschenkraft-Übertragungselement (7b) zusammenwirkendes Bauteil einen Rotationsdetektor aufweist, der eine Rotation des Menschenkraft-Übertragungselement (7b) erfasst.

9. Fahrrad (1) mit elektrischer Unterstützung nach Anspruch 3, wobei das endlose Antriebskraftübertragungselement (15) ein Zahnriemen ist.

## Revendications

1. Bicyclette à assistance électrique (1) comprenant une unité d'entraînement à moteur (20) munie d'un moteur (21), la bicyclette à assistance électrique (1) étant capable de se déplacer avec une combinaison d'une force d'entraînement d'origine humaine générée par une force de pédale provenant d'une pédale et d'une force d'entraînement auxiliaire générée par le moteur (21),
dans laquelle la bicyclette à assistance électrique (1) comprend un vilebrequin (7a) qui reçoit la force d'entraînement d'origine humaine transmise par la pédale (8) et tourne autour d'un axe différent du moteur (21),
le vilebrequin (7a) a un élément de transmission de puissance d'origine humaine (7b) sur une périphérie extérieure du vilebrequin (7a), l'élément de transmission de puissance d'origine humaine (7b) recevant la force d'entraînement d'origine humaine transmise,
le vilebrequin (7a) a un élément de transmission de force résultante (29) sur la périphérie extérieure du vilebrequin (7a), l'élément de transmission de force résultante (29) recevant une force résultante de la force d'entraînement d'origine humaine et de la force d'entraînement auxiliaire provenant du moteur (21), et
l'unité d'entraînement à moteur (20) comporte un mécanisme d'engrenage planétaire (50) qui change un engrenage pour la force résultante de la force d'entraînement d'origine humaine et de la force d'entraînement auxiliaire provenant du moteur (21),
dans laquelle le mécanisme d'engrenage planétaire (50) comporte un engrenage interne (55) qui introduit la force résultante de la force d'entraînement d'origine humaine et de la force d'entraînement auxiliaire provenant du moteur (21), et un support (54) qui délivre en sortie la force résultante avec une vitesse variable, **caractérisée en ce que** la bicyclette à assistance électrique (1) comprend en outre un embrayage de transmission (58) qui commute l'engrenage interne (55) et le support (54) entre un état de rotation intégrale et un état de rotation non intégrale.

2. Bicyclette à assistance électrique (1) selon la revendication 1, dans laquelle le mécanisme d'engrenage planétaire (50) comporte une roue solaire (51) et l'engrenage interne (55) qui sont coaxiaux avec le vilebrequin (7a).

3. Bicyclette à assistance électrique (1) selon l'une des revendications 1 et 2, dans laquelle l'élément de transmission de puissance d'origine humaine (7b), l'élément de transmission de force résultante (29) et le mécanisme d'engrange planétaire (50) sont disposés dans l'unité d'entraînement à moteur (20), et la force résultante transmise à l'élément de transmission de force résultante (29) à travers le mécanisme d'engrange planétaire (50) est configurée pour être transmise à une roue arrière (4) à travers une roue de sortie de force d'entraînement (13) coaxiale avec le vilebrequin (7a) et un élément de transmission de force d'entraînement sans fin (15) enroulé sur la roue de sortie de force d'entraînement (13).

4. Bicyclette à assistance électrique (1) selon la revendication 1, comprenant en outre un élément de fixation (57) fixé à un boîtier d'unité (22) de l'unité d'entraînement à moteur (20), et un embrayage unidirectionnel (30) pour fixer une roue solaire (51) disposé entre l'élément de fixation (57) et la roue solaire (51).

5. Bicyclette à assistance électrique (1) comprenant une unité d'entraînement à moteur (20) munie d'un moteur (21), la bicyclette à assistance électrique (1) étant capable de se déplacer avec une combinaison d'une force d'entraînement d'origine humaine générée par une force de pédale provenant d'une pédale et d'une force d'entraînement auxiliaire générée par le moteur (21),
dans laquelle la bicyclette à assistance électrique (1) comprend un vilebrequin (7a) qui reçoit la force d'entraînement d'origine humaine transmise par la pédale (8) et tourne autour d'un axe différent du moteur (21),
le vilebrequin (7a) a un élément de transmission de puissance d'origine humaine (7b) sur une périphérie extérieure du vilebrequin (7a), l'élément de transmission de puissance d'origine humaine (7b) recevant la force d'entraînement d'origine humaine transmise,
le vilebrequin (7a) a un élément de transmission de force résultante (13) sur la périphérie extérieure du vilebrequin (7a), l'élément de transmission de force résultante (29) recevant une force résultante de la force d'entraînement d'origine humaine et de la force d'entraînement auxiliaire provenant du moteur (21), et
l'unité d'entraînement à moteur (20) comporte un mécanisme d'engrenage planétaire (60) qui change un engrenage pour la force résultante de la force d'entraînement d'origine humaine et de la force d'entraînement auxiliaire provenant du moteur (21),
**caractérisée en ce que**
le mécanisme d'engrenage planétaire (60) comporte une roue solaire (71) qui introduit la force résultante de la force d'entraînement d'origine humaine et de la force d'entraînement auxiliaire provenant du moteur (21), et un support (74) qui délivre en sortie la force résultante avec une vitesse variable, où la bicyclette à assistance électrique (1) comprend en outre un embrayage de transmission (76) qui commute la roue solaire (71) et le support (74) du mécanisme d'engrenage planétaire (60) entre un état de rotation intégrale et un état de rotation non intégrale.

6. Bicyclette à assistance électrique (1) selon la revendication 5, comprenant en outre un dispositif de commutation d'engrenage interne qui commute l'engrenage interne du mécanisme d'engrenage planétaire (60) entre un état fixe et un état de rotation.

7. Bicyclette à assistance électrique (1) selon l'une des revendications 1 à 6, dans laquelle l'élément de transmission de puissance d'origine humaine (7b) a une partie de génération de magnétostriction pour un capteur de couple qui détecte la force d'entraînement d'origine humaine.

8. Bicyclette à assistance électrique (1) selon l'une des revendications 1 à 7, dans laquelle l'élément de transmission de puissance d'origine humaine (7b) ou un composant s'emboîtant avec l'élément de transmission de puissance d'origine humaine (7b) comporte un détecteur de rotation qui détecte une rotation de l'élément de transmission de puissance d'origine humaine (7b).

9. Bicyclette à assistance électrique (1) selon la revendication 3, dans laquelle l'élément de transmission de force d'entraînement sans fin (15) est une courroie crantée.
